# EUROPEAN PATENT SPECIFICATION

(11) **EP 0 338 781 B1**
(45) Date of publication and mention of the grant of the patent: **08.06.1994**
(21) Application number: 89303837.2
(22) Date of filing: 18.04.1989
(51) Int. Cl.: G11B 20/18, G11B 20/10, G11B 20/12

(54) **Data transmission and recording**
Datenübertragung und -aufzeichnung
Transmission et enregistrement de données

(30) Priority: 19.04.1988 JP 96547/88
(43) Date of publication of application: 25.10.1989
(73) Proprietor: SONY CORPORATION, Tokyo 141 (JP)
(72) Inventor: Sako, Yoichiro c/o Patents Division, Shinagawa-ku Tokyo 141 (JP); Odaka, Kentaro c/o Patents Division, Shinagawa-ku Tokyo 141 (JP)
(74) Representative: Thomas, Christopher Hugo

(56) References cited:
- GB-A- 2 082 426
- GB-A- 2 140 178
- PATENT ABSTRACTS OF JAPAN vol. 10, no. 341 (P-517)(2397) 18 November 1986;& JP-A-61142576
- IEEE TRANSACTIONS ON CONSUMER ELECTRONICS, vol. 32, no. 3, August 1986, New York,US;pages 416 - 423; T. ARAI et al.:"Digital signal processing technology for R-DAT"

## Description

This invention relates to data transmission and recording, and more particularly to data transmission apparatus capable of operating in either of two modes, to apparatus for receiving data so transmitted, and to apparatus for recording pulse code modulated (PCM) audio signals.

In the case of an 8-mm video tape recorder (VTR), an audio signal is recorded by mixing it with a colour video signal such that the audio signal is separated in terms of frequency from the colour signal when both are subjected to frequency modulation, or as an alternative, the audio signal can be subjected to PCM and separated, in terms of recording location, from the colour signal, and in both cases the recording can be made with each track comprising both signals.

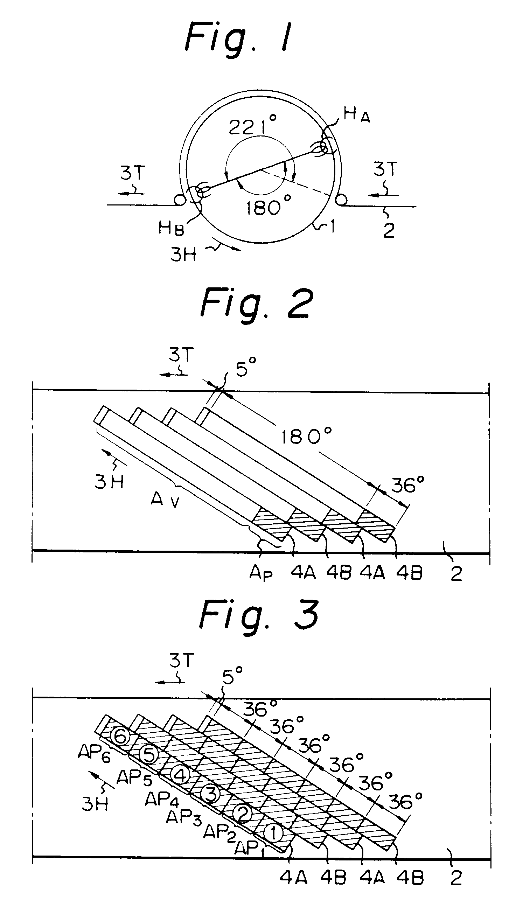

Figure 1 shows one example of a rotary head device of an 8-mm VTR, and figure 2 shows its tape format.

In the device of Figure 1, rotary magnetic heads HA and HB for recording and reproducing have different azimuth angles, are angularly spaced at 180°, and are rotated in the direction 3H at a frequency (30 Hz) on a drum 1 from the circumference of which they project slightly. A magnetic tape 2 is wrapped around the drum 1 over an angular range of 221°, and runs at a constant speed in the direction 3T.

Oblique tracks 4A and 4B having a length corresponding to 221° are therefore formed alternately on the tape 2 by the heads HA and HB as shown in Figure 2, and a signal is recorded. In an area AP of the tracks 4A and 4B corresponding to an angular range of about 36° from the time when the heads HA and HB start scanning, and containing a margin for after-recording and a guard band for distinguishing between the area AP and an area AV, an audio signal associated with one field of a video signal is recorded in a PCM time-compressed state. In the subsequent area AV corresponding to an angular range of 180°, a colour video signal of one field, a frequency modulated (FM) audio signal and a signal for tracking are recorded. The FM audio signal is mixed in a lower frequency band than the colour video signal. The remaining 5° is left as an allowance period for the separation of the heads HA and HB from the tape 2. Figure 3 shows a track format for recording a PCM audio signal on areas AP2 to AP6 respectively which are formed by dividing the area AV (Figure 2) into angular ranges of 36°, thereby enabling recording of six audio channels in the areas AP1 to AP6.

The recording system of Figures 2 and 3 is further described in US patent specification US-A-4 542 419.

The PCM audio signal in the above-mentioned 8-mm VTR has 8-bit words and is slightly inferior in terms of performance as compared with a compact disc (CD) or a digital audio tape.

As performance of magnetic tape as a recording medium is improved, and without extending the PCM area AP beyond the existing angular range of 36°, audio data having 12-bit words can be recorded at a sampling frequency of 48 kHz on metal power tape (MP tape) comprising metal power and a binder, and audio data having 16-bit words can be recorded at the sampling frequency, of 48 kHz on metal evaporated tape (ME tape).

Thus, the number of bits per word of the audio data can be increased. In this case, it is convenient for a user if he can select either of two modes for recording 12-bit audio data (MP mode) or 16-bit audio data (ME mode).

However, although the adoption of two such modes is possible, the processing system for 12-bit data and 16-bit data must be provided separately, with a consequent undesired increase in hardware.

A previously proposed digital audio tape recorder (DAT) is constructed so that it can assume a 16-bit mode and a 12-bit mode. In the case of such a DAT, the sampling frequency fs is 48 kHz in the 16-bit mode, and 32 kHz in the 12-bit mode, in which the speed of the magnetic tape and the speed of the rotary head drum are reduced to half to permit longer recording. Specifically, although the bit period of serial data is 13 »sec in the case of fs = 48 kHz and 16-bit words, the bit period of the serial data is 26 »sec in the case of fs = 32 kHz, and 12-bit words. If the speed of the tape and the drum are reduced to half, the recording wavelength, that is, the transmission bit rate per bit on the tape can be kept identical.

In a DAT, increase in the amount of hardware is prevented by common use of an error correction encoder, decoder, etc. in the two modes as now described.

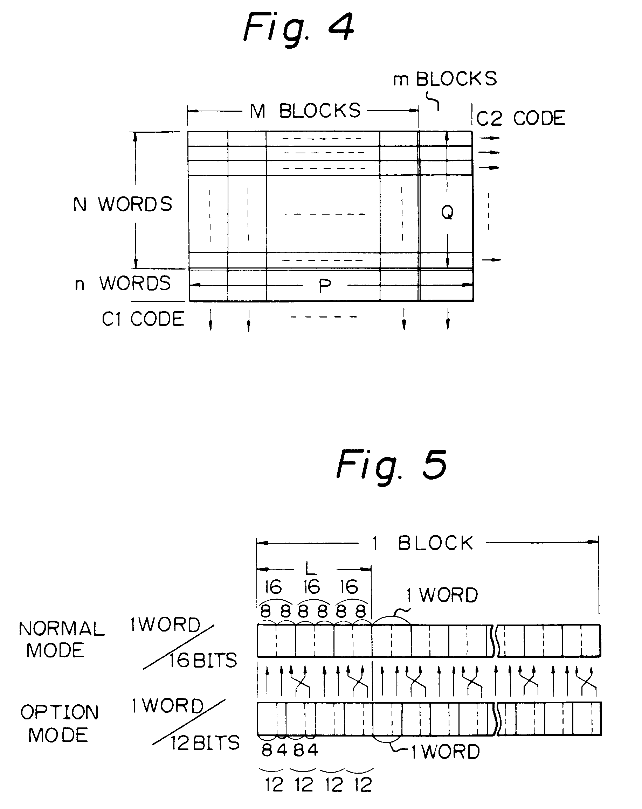

Figure 4 shows a code structure of a PCM audio signal and redundant data of the error correction code which are recorded on one segment formed by one scan of a rotary head.

In Figure 4 each vertical column of the two-dimensional array comprises one block, and M blocks are arranged in the horizontal direction. A PCM audio signal in one block is composed of N words. An error detection code C1 is added to each block in the vertical direction of the array, and an error correction code C2 is added in the horizontal direction. An n-word check code P of the error detection code C1 is contained in each column, and the error detection code C1 also relates to an m-word check code Q of the error correction code C2.

In this case, the sizes of the two-dimensional arrays over which the encoding of C1 and C2 is done are the same for the 12-bit mode and the 16-bit mode. Also, the length of one block data which is one code sequence of the code C1 is selected to be the least common multiple L of 16 and 12, multiplied by an integer, and the number of bits per block is made the same in both modes. In the case of the 16-bit mode, the 16-bit words comprise an upper (that is, more significant) eight-bit symbol and a lower (that is, less significant) eight-bit symbol to form an error correction code, and in the case of the 12-bit words, as shown in Figure 5, exactly the same error correction encoding process as the case of the 16-bit words is performed after allotting its upper eight bits and lower four bits.

This permits the common use of the error correction encoder and the error correction decoder in both modes, so preventing an increase in the hardware (see US patent specifications US-A-4 688 225 and US-A-4 758 907.

GB-A-2140178 (which corresponds to US-A-4 688 225) shows recording and reproducing circuits for use in the recording of audio PCM signals on a magnetic tape. An audio signal is converted to an audio PCM signal with 16 bit words by an A/D converter. The audio PCM signal is supplied to an input terminal of a switching circuit, a first output terminal of which is connected to a recording encoder and a second output terminal of which is connected to a digital non-linear compression circuit. The switching circuit selects the first output when 16 bit words are to be recorded, and selects the second output when 12 bit words are to be recorded. In addition, the sampling frequency is switched between 48kHz and 32 kHz in association with the change-over of the switching circuit. Thus, for 16 bit word format, sampling is performed at 48 kHz and the audio PCM signal is supplied to the recording encoder. In the 12 bit word format, 16 bits are compressed to 12 by the non-linear compression circuit and the compressed 12 bit data is further supplied to a bit arrangement circuit, an output of which is supplied to the recording encoder. Upon reproduction, the signal to be reproduced is supplied to a clock recovery circuit. The clock recovery circuit produces a bit clock signal synchronised with the signal to be reproduced. An audio PCM signal is provided at an output of a reproducing decoder from which it is supplied to a switching circuit, a first output terminal of which is connected to an error correction circuit and a second output terminal of which is connected to a bit rearrangement circuit. The switching circuit selects the first output terminal for 16 bit words and selects the second output terminal for 12 bit words. The switching operation of the switching circuit is automatically performed by, for example, identifying a format discrimination signal added to the recording signal. An output of the bit rearrangement circuit is supplied to a digital non-linear expansion circuit which performs an expansion operation complementary to the compression effected by the non-linear compression circuit, so that an audio PCM signal with 16 bit words appears at its output. The error correction circuit corrects error words which could not be corrected by the reproducing decoder. The output of the error correction circuit is supplied to a D/A converter so that a reproduced version of the original analog audio signal is available at an output terminal.

Therefore, in an 8-mm VTR consideration has been given to a method of using a conversion table for 16 bits and 12 bits of said DAT when recording and reproduction of audio data of both the ME mode (16-bit mode) and the MP mode (12-bit mode) are effected in the PCM audio area AP.

However, in the case of an 8-mm VTR, the sampling frequency of the audio signal, the transport speed of the magnetic tape and the rotational speed of the rotary heads are not changed with the 12-bit and 16-bit modes. The recording is made in the PCM audio area AP with an adequate recording wavelength per bit depending on the tape type (ME/MP), and the transmission bit rate is not the same in both modes as it is in a DAT. As a result, the sizes of the two-dimensional arrays of the PCM audio signal are different in the two modes.

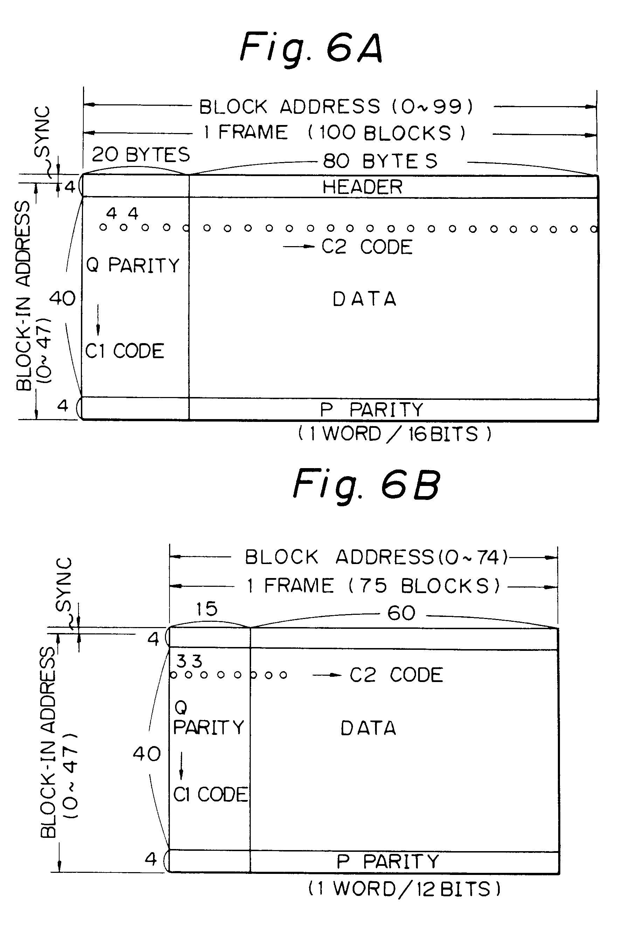

For example, Figures 6A and 6B show respective examples of a two-dimensional array of error correction blocks of a one-word-16-bit mode and a one-word-12-bit mode for NTSC. The arrays are stored in a memory. Numerals in the drawing show the byte number (one byte = 8 bits = 1 symbol), each column in the vertical direction is one block having (4 + 40 + 4 = 48 bytes = 48 symbols = 8 symbols + 20 words), and this is maintained unchanged in both modes. Consequently, a circuit for adding the block synchronization signal or block address data can have the same structure in both modes. In the drawing, a header comprising the block synchronization signal and block address data is indicated in the case where the header is added to each block. The detail of the construction of the block shown in Figure 6A is described in our US patent US-A-4 955 022, corresponding to EP-A-0 311 411. Each block in the case of the 12-bit mode is handled as symbol data for every eight bits by a conversion table in a manner similar to the above-mentioned DAT.

In this way, if the length of each block in the vertical direction of the array of PCM audio signals is selected to have a common value (48 bytes in the drawings) for the 16-bit mode and the 12-bit mode, the number of bytes in the horizontal direction become different since the number of words (not the number of bits) contained in the arrays are the same in both modes. However, in the following manner, it is possible to keep the format of the error correction code unchanged.

Specifically, the number of symbols of audio data in the horizontal direction is 80 bytes in the 16-bit mode in this example, and the number is selected to be 12/16 = 3/4 of 80 bytes = 60 bytes in the 12-bit mode. In the 16-bit mode, as shown by a circle ○ in Figure 6A, one sequence of the error correction code C2 in the horizontal direction is composed of symbols which occur every four bytes. Consequently one row in the horizontal direction has four sequences for the error correction code C2. For example, one sequence of the code C2 is formed by a (25, 20, 6) Reed-Solomon code having a five-byte check code per sequence. A check code Q of a total of 20 bytes for four sequences is added to the left of each row of the PCM audio data as shown in Figure 6A.

In addition, in the 12-bit mode, as shown by circles ○ in Figure 6B, one sequence of the error correction code C2 is composed of symbols which lie every three bytes to make one row in the horizontal direction. One sequence of the code C2 is formed by a (25, 20, 6) Reed-Solomon code in a manner similar to the 16-bit mode, and a five-byte check code Q is developed per one sequence. A check code of a total of 15 bytes is added to the left of the audio PCM data as indicated in Figure 6B.

In this case, the number of bytes of audio data corresponding to one field period to be recorded in the area AP on a tape becomes: 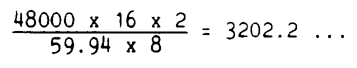
when the sampling frequency is 48 kHz, each word is 16 bits, and two channels (left and right channels) are employed in the case of an NTSC signal. As a result, 3204 bytes are needed. However, in the case of Figure 6A, 40 x 80 = 3200 bytes are needed, so there is a remainder of 4 bytes. The 4-byte data can be dealt with adequately by inserting it into the header. The technique described in the above-mentioned US patent US-A-4 955 022 can be employed for inserting four symbols in the header.

The error correction code C1 in the vertical direction is the same for both modes, and a (44, 40, 5) Reed-Solomon code, for example, is used.

In this way the formats of the error correction codes in the two modes can be made identical, and a common addition circuit can be used for adding the header containing a block synchronization signal and address data.

However, as clear from Figures 6A and 6B, the block structure of the two-dimensional array for error correction is different for the 16-bit mode and the 12-bit mode. For this reason, different processors are needed for the respective modes, which results in an excessive hardware requirement.

According to the present invention there is provided data transmission apparatus capable of selecting a first mode in which one data unit is made up of m bits and a second mode is which one data unit is made up of n bits (m > n) with the same sampling frequency, the apparatus comprising:
error-correction encoding means used commonly for the first and second modes;
insertion means for inserting (m - n) insertion bits of dummy data into said data unit;
elimination means for eliminating said (m - n) insertion bits from the data unit; and
addition means for adding header information including at least a block synchronization signal to the data;
the apparatus being arranged so that
in said first mode, m-bit data units are subjected to an encoding process at said error-correction encoding means, a block synchronization signal for one-unit-m-bits data is added for every block of the encoded data at said addition means, and data from the addition means is transmitted; and
in said second mode, said insertion bits are inserted in each data unit of one-unit-n-bits data, at said insertion means so as to make one-unit-m-bits data, said data are subjected to an encoding process at said error-correction encoding means, said insertion bits are eliminated from said encoded data at said elimination means to return them to one-unit-n-bits data, data from said elimination means is supplied to said addition means, a block synchronization signal for one-unit-n-bits data is added for every block of the encoded data at said addition means, and data from the addition means is transmitted.

According to the present invention there is also provided apparatus for receiving data selectively transmitted in a first mode in which one unit is made up of m bits or in second mode in which one unit is made up of n bits (m > n) with the same sampling frequency, the apparatus comprising:
switching signal generating means for detecting whether the received data are first mode data or second mode data and generating a mode switching signal in dependence thereon;
insertion means for inserting (m - n) insertion bits of dummy data;
error-correction decoding means used commonly for the first and second modes; and
elimination means for eliminating the (m - n) insertion bits from the data; the apparatus being arranged so that
when the first mode is selected by said mode switching signal, the received data are subjected to an error-correction decoding process at said error-correction decoding means, and one-unit-m-bit data are decoded; and
when the second mode is selected by said mode switching signal, the received data are supplied to said insertion means so that said insertion bits are inserted in every unit of the one-unit-n-bit data to make one-unit-m-bit data, these data art supplied to said error-correction decoding means and decoding-processed, the decoding-processed data are fed to said elimination means and said insertion bits are eliminated so as to decode the one-unit-n-bit data.

According to the present invention there is also provided apparatus for recording a PCM audio signal on a magnetic tape medium by magnetic heads, and capable of selecting a first mode in which one unit is made up of m bits and a second mode in which one unit is made up of n bits (m > n) with the same sampling frequency, the apparatus comprising:
error-correction encoding means used commonly for the first and second modes;
insertion means for inserting (m - n) insertion bits of dummy data into said unit data;
elimination means for eliminating said (m - n) insertion bits from the data; and
addition means for adding header information including at least a block synchronization signal to the data; the apparatus being arranged so that
in said first mode, data whose units are of m bits are subjected to an encoding process at said error-correction encoding means, a block synchronization signal for one-unit-m-bit data is added for every block of the encoding-processed data at said addition means, and data from the addition means are transmitted; and
in said second mode, said insertion bits are inserted in each unit of one-unit-n-bit data at said insertion means so as to form one-unit-m-bit data, said data are supplied to said error correction encoding means and subjected to an encoding process, said insertion bits are eliminated from said encoding-processed data at said eliminating means to return the data to one-unit-n-bit data, data from said elimination means are supplied to said addition means, a block synchronization signal for one-unit-n-bit is added for every block, and data from the addition means are transmitted to said magnetic heads (HA, HB) and recorded.

In accordance with one aspect of the invention, a data transmission apparatus capable of selecting a first mode in which one data word is made up of m bits with a predetermined sampling frequency and a second mode in which one data word is composed of n bits (m > n) with the same sampling frequency, comprises error correction encoding means commonly used for the first and second modes, insertion means for inserting bits (dummy data) of (m - n) bits into the data words of n bits, means for eliminating the inserted (m - n) bits from the data, and means for adding a block synchronization signal to the data.

In accordance with another aspect of the invention, a data reception apparatus for receiving transmission data from said data transmission apparatus, comprises synchronization detection means for detecting the block synchronization signal from the transmission data, switching siganl generating means for deciding whether the detected block synchronization signal is a first block synchronization signal or a second block synchronization and generating a mode switching signal, insertion means for inserting bits (dummy data) of (m - n) bits, error correction decoding means used commonly for the first and second modes, and elimination means for eliminating the inserted bits (dummy data) of (m - n) bits from data.

The switching signal generating means can comprise means for generating a mode switching signal by decoding an identification code when an identification code for the first mode and the second mode has been added to the data.

In an embodiment of data transmission apparatus according to the invention, in the case of the first mode, data in which one word is composed of m bits is subjected to an encoding process at said error-correction encoding means, a block synchronization signal for one-word-m-bits is added for every block of the encoding-processed data at said addition means and data from the addition means is transmitted. In the case of the second mode, said inserted bits (dummy data) are inserted for one word of one-word-n-bit data at said insertion means so as to make one-word-m-bit data, these data are supplied to said error correction encoding means, subjected to an encoding process, said inserted bits (dummy data) are eliminated from the encoding-processed data at said elimination circuit to form one-word-n-bit data, data from the eliminating circuit is supplied to said addition means, a block synchronization signal for one-word-n-bits is added for every block, and data from the addition means is transmitted.

In an embodiment of data reception apparatus according to the invention, when the first mode is selected by said mode switching signal, the data from said synchronization detection means is subjected to an error-correction decoding process at said error-correction decoding means, and one-word-m-bit data are decoded, and when the second mode is selected by said mode switching signal, the data from said synchronization detection means are supplied to said insertion means so that said inserted bits (dummy data) are inserted for every word of the one-word-n-bit data to make one-word-m-bit data, these data are supplied to said error-correction decoding means and decoding processed, and decoding-processed data is fed to said elimination means and said inserted bits (dummy data) are eliminated so as to decode the one-word-n-bit data.

The invention will now be described by way of example with reference to the accompanying drawings, throughout which like parts are referred to by like references, and in which:
Figure 1 is a schematic plan view of an 8-mm VTR;
Figures 2 and 3 show magnetic tape recording formats;
Figures 4 and 5 are schematic diagrams for explaining one example of a previously proposed data transmission or reception apparatus;
Figures 6A and 6B are schematic diagrams of one example of a known error correction code;
Figure 7 is a block diagram of an embodiment of data transmission apparatus according to the present invention;
Figure 8 is a block diagram of an embodiment of data reception apparatus according to the present invention;
Figures 9A and 9B are diagrams of data arrangements in a first mode;
Figures 10A and 10B are diagrams of data arrangements in a second mode;

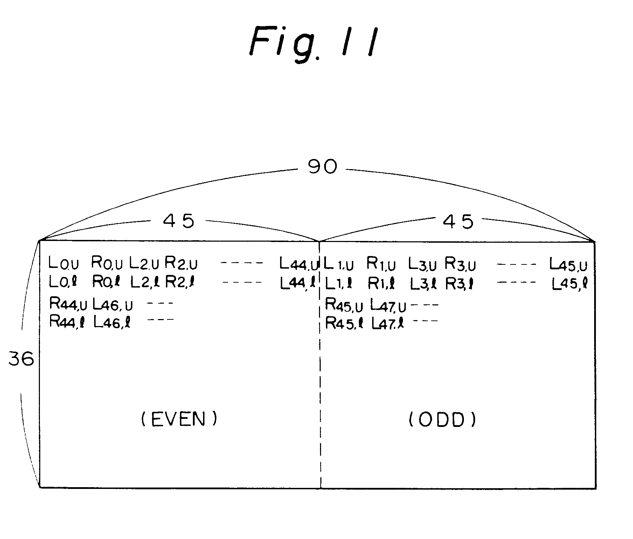

Figure 11 is a diagram of a detailed data arrangement;
Figures 12A to 12C and 13 are schematic diagrams of transmission data; and
Figures 14A to 14D are diagrams for explaining encoding and decoding processes.

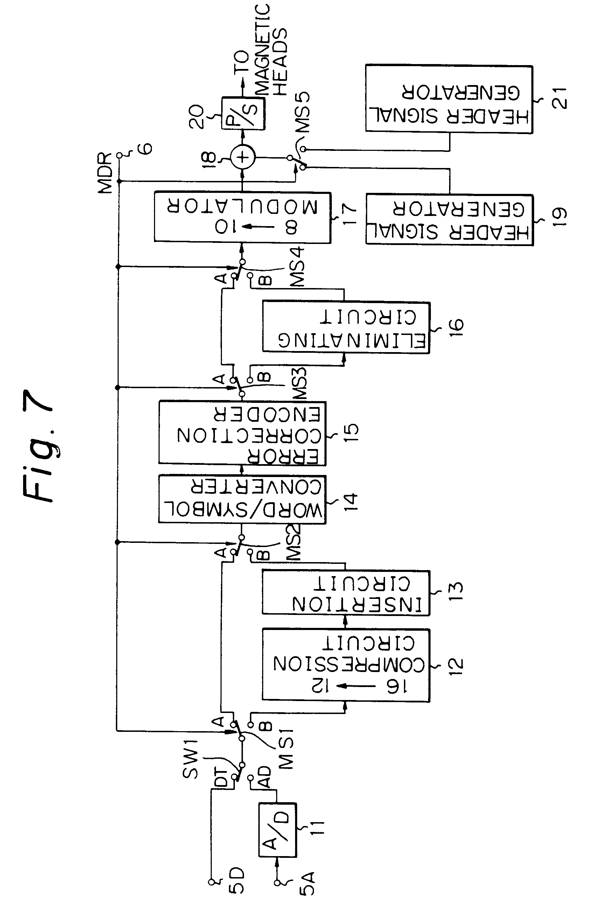

Figure 7 shows an embodiment of data transmission apparatus in which the invention is applied to a recording system for PCM audio data in an 8-mm VTR.

The apparatus comprises mode switching circuits MS1 to MS5, each of which is switched to engage a terminal A by a mode switching signal MDR from a terminal 6 in a one-word-16-bits mode (hereinafter called the "A mode" or "ME mode"), and to engage a terminal B by the mode switching signal MDR in a one-word-12-bits mode (hereinafter called the "B mode" or "MP mode"). The mode switching signal MDR results, for example, from a user operating a switch, and/or a metal powder tape and a metal evaporated tape can be distinguished automatically by an identification means such as a hole in the cassette, and the mode switching signal MDR is then automatically supplied in response to the output of the identification means.

SW1 is a switch circuit for switching manually or automatically between digital and analogue input audio data.

Digital audio data derived from a CD, DAT or the like is supplied to a terminal DT of the switch circuit SW1 through an input terminal 5D. The digital audio data is two-channel data for right and left channels and is parallel data, consisting of 16-bit words with a sampling frequency of 48 kHz.

An analogue audio signal derived from an FM tuner, television receiver, microphone or the like (left and right channels) is supplied to an analogue-to-digital (A/D) converter 11 through an input terminal 5A, sampled at the sampling frequency of 48 kHz, converted to 16-bit word parallel data, and supplied to a terminal AD of the switch circuit SW1.

The A mode will be described first.

16-bit word data from the switch circuit SW1 is supplied to a word/symbol converter 14 through the switch circuits MS1 and MS2, and is converted into a symbol comprising upper and lower eight bits. The symbol data is supplied to an error correction encoder 15 and subjected to an error-correction encoding process on a Galois field GF 2⁸.

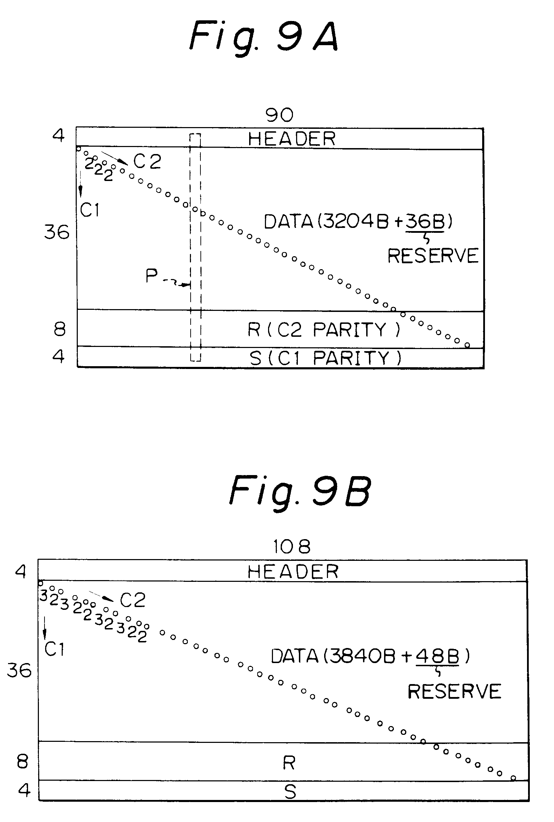

Figures 9A and 9B show a two-dimensional array of audio data of one field to be recorded in a PCM audio area AP in the A mode. Figure 9A is suitable for the NTSC system, and Figure 9B is suitable for the CCIR system.

In Figure 9A and 9B, each column in the longitudinal direction comprises one block, 90 blocks are arranged in the horizontal direction for NTSC, and 109 blocks are arranged in the horizontal direction for CCIR. One block contains a 36-symbol PCM audio signal, so the arrays shown accept 3240 symbols (byte) (3204 bytes of data and 36 bytes reserve) of PCM audio signals for NTSC, or 3888 symbols (3840 bytes of data and 48 bytes reserve) of PCM audio signals for CCIR.

An error correction code C2, for instance, a (44, 46, 9) Reed-Solomon code is formed in the diagonal direction of the arrays and an 8-symbol check code R is derived and added to the lower side of the PCM audio signals. In this example, the error correction code C2 in the diagonal direction sequentially contains symbols at positions shifted by two symbols in the horizontal direction when shifted by one symbol in the longitudinal direction, in the NTSC system, and at positions shifted by three, two, three, two, two, this sequence repeating in the horizontal direction, when shifted by one in the longitudinal direction, in the CCIR system.

For every block in the longitudinal direction of the array an 8-symbol check code R of the error correction code C2 is added to the array, and an error detection or correction code C1, for example, a (48, 44, 5) Reed-Solomon code is derived to add a 4-symbol check code S in the longitudinal direction.

A 4-byte header comprising a 1-byte block synchronization signal and three bytes including a block address signal is added at the start position of each block in the longitudinal direction, and one block, for example block P having a structure as shown in Figure 12A, containing header information, is added by an adder 18 as mentioned later, and is not added in the encoding process. Alternatively, however, the header may be added in the encoding process and the information of the header may then be error-encoding-processed as data.

It is to be noted that the error correction code C2 may be in the form of two sequences of symbols alternating in the longitudinal direction, with a (22, 18, 5) Reed-Solomon code, for example, applied to the respective sequences. In this way the load on an error correcting encoder 15 can be reduced.

Additionally, in this example, even number data LOu, LOℓ, L2u, L2ℓ, ..., ROu, ROℓ, R2u, R2ℓ, ... of the left and right channel audio data, and odd number data Llu, Llℓ, L3u, L3ℓ, ..., Rlu, Rlℓ, R3u, R3ℓ, ... of the left and right channel audio data are separately arranged in the left and right sides of the array as shown, in which suffixes u and ℓ indicate the upper 8-bit symbol and the lower 8-bit symbol of the 16-bit word respectively. As mentioned later, the even number data and the odd number data are recorded at separate positions, with the data sequentially recorded in the longitudinal direction, so that even if either the even number data or the odd number data is lost due to a burst error, error correction can easily be effected by average interpolation using the remaining data.

The output of the error correction encoder 15 is fed to a 8-10 modulator 17 through the switch circuits MS3 and MS4, and 8-bit symbol data are converted into 10-bit data. The output of the 8-10 modulator 17 is supplied to the adder 18. The 8-10 modulator 17 is provided for preventing errors caused by a dc component in a recording data, and generates 10-bit data with a reduced dc component.

A 16-bit block synchronization signal SYNC and an address signal are supplied to the adder 18 through the switch circuit MS5 from a header signal generator 19 and are added to the data. Also, an identification signal ID for distinguishing the A mode from the B mode may be inserted in the header signal and added to the data.

The output of the adder 18 is supplied to a parallel-serial converter 20 where it converted into serial data sequentially from the left of the array of Figure 9, and the serial data are supplied to rotary magnetic heads for recording on a magnetic tape.

The B mode will now be described.

16-bit word data from the switch circuit MS1 is supplied to a 16 to 12 compression circuit 12 which for example, performs non-linear compression for form 12-bit word data which is supplied to an insertion circuit 13. In the insertion circuit 13, the 4-bit dummy data, that is 0000 is added to the 12-bit data to form 16-bit data.

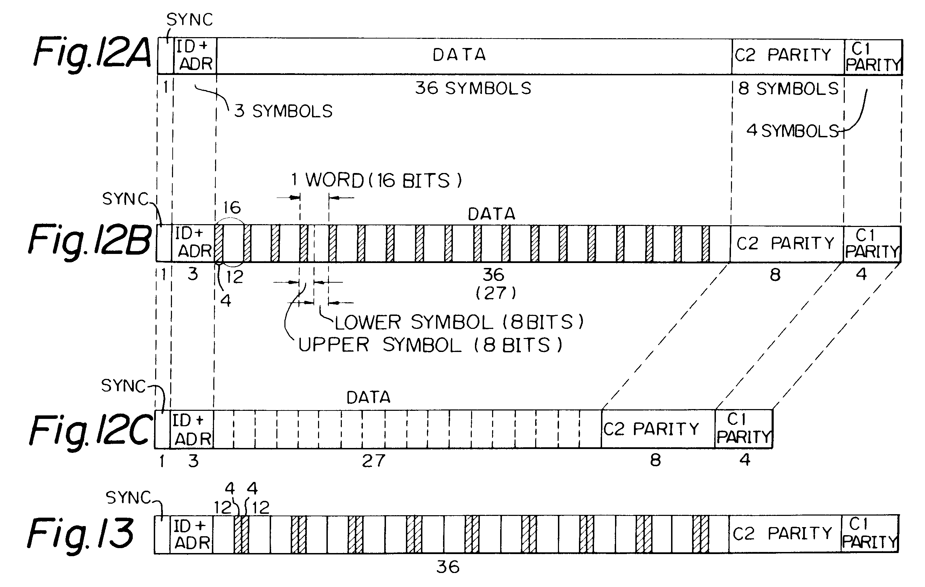

In this case, the four insertion bits are added to the upper-bit side of 12-bit word as shown hatched in Figure 12B. As a result, each upper symbol is made up of the upper four bits of the 12-bit word and the four insertion bits.

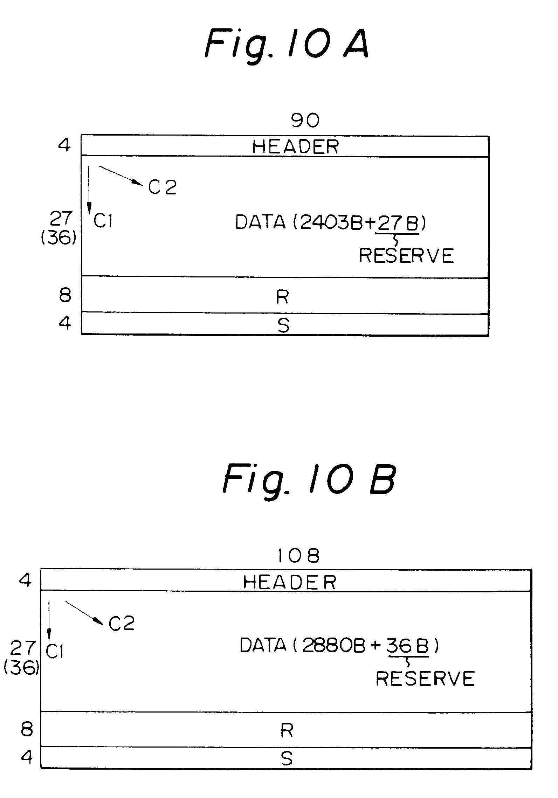

The 16-bit data from the insertion circuit 13 is supplied to a word/symbol converter 14 through the switch circuit MS2, where they are converted into symbol data, and are then supplied to the error correction encoder 15 so that the error correction codes C1 and C2 can be added in a similar manner to the A mode. In this case, since the data with the four insertion bits added has the same two-dimensional array as in the A mode as shown in Figure 10, the data contained in one block corresponds to 27 bytes in the B mode, that is counting only data and excluding the insertion bits (dummy data). In Figure 10, 27 bytes in the longitudinal direction does not include the dummy data, and after inserting the dummy data, the array having 36 bytes in the longitudinal direction is formed in a memory of an error correction encoder 15.

The two-dimensional data array contains 2430 bytes (2403 bytes of data and 27 bytes reserve) in NTSC as shown in Figure 10A, and 2916 bytes (2880 bytes of data and 36 bytes reserve) in CCIR as shown in Figure 10B. The reserve bytes are provided to identify the character of the PCM audio signal.

Data from the error correction encoder 15 are supplied to an insertion-data eliminating circuit 16 through the switch MS3 for the elimination of the four insertion bits. As a result, from the eliminating circuit 16, block data comprising 12-bit words (27-byte data and parities R, S) are obtained as shown in Figure 12C, which are supplied to the 8-10 modulator 17 through the switch circuit MS4, converted into 10-bit data, and then supplied to the adder 18. In the B mode, a 12-bit block synchronization signal, etc. are produced by a header signal generator 21 for each block, and are supplied to the adder 18 through the switch circuit MS5 and added to the data. The output signal of the adder 18 is recorded together with a video signal after being passed through the parallel-serial converter 20.

As described above the four insertion bits are added on the side of the upper bits of a 12-bit word, but as an alternative they can be added on the side of the lower bits of the 12-bit word.

In addition, as indicated by hatching in Figure 13, the insertion bits may be added so that they are added on the lower-bit side of odd number words and on the upper-bit side of even number words (that is, words having odd and even addresses respectively in the block.

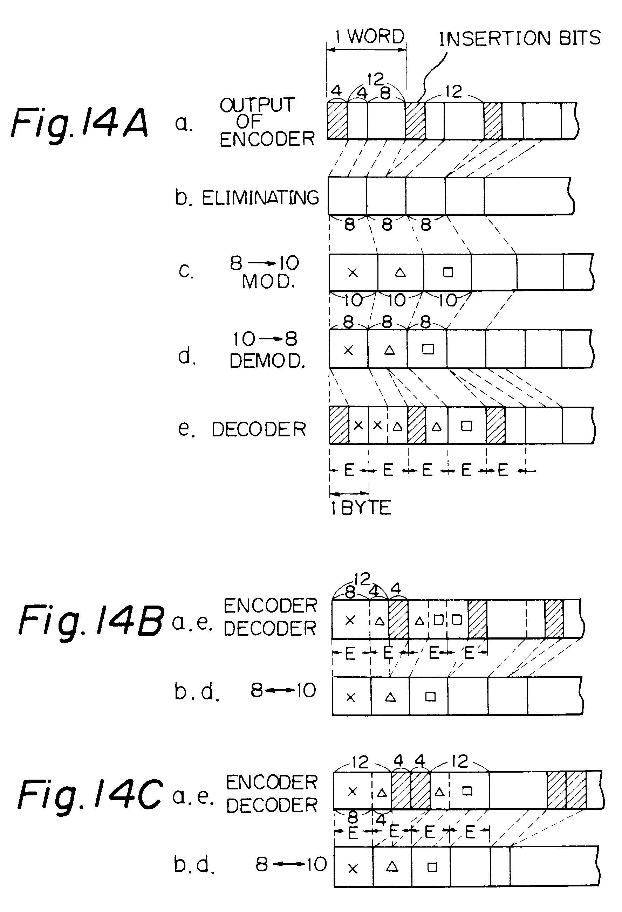

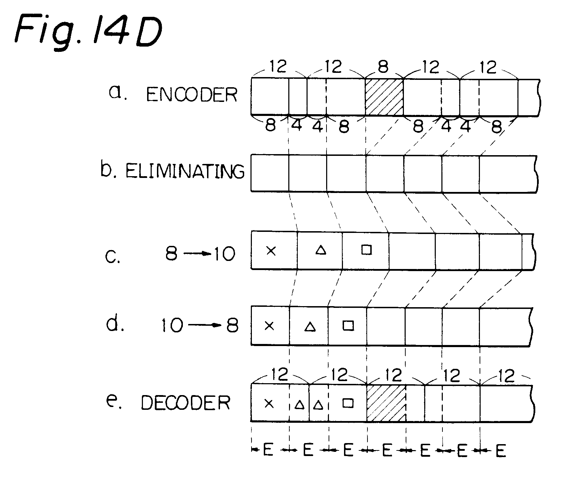

One effect of the 8-10 modulation is error reduction in the process of error correction encoding and decoding. Referring to Figure 14, the explanation of this is as follows.

Figure 14A-a shows the case of inserting the dummy data (the hatched portion) only at the upper-bit side of each word. The output data of the eliminating circuit 16 become only the true 8-bit data as shown in Figure 14A-b. This 8-bit data is converted to 10-bit data by the 8-10 modulator 17, and the output data of the 8-10 modulator 17 are recorded/reproduced magnetically (Figure 14A-c). Consider a case in which a one-byte error appears in the output of the 10-8 demodulator 27 (shown by mark X, △ or □ in Figure 14A-d) having occurred in the process of magnetic recording/reproducing. In this case, the one-byte-errors shown by marks X and △ in Figure 14A-e are spread between two bytes at the error correction decoder 29 after insertion of the dummy data. The cycle of the error correcting operation of the encoder 29 is indicated by E in the drawings so that, the error bits marked X, for example, are spread between two operational cycles.

Figure 14B shows the case of inserting the dummy data (the hatched portion) only at the lower-bit side of each word (the lower side of the lower symbol), and a detailed description thereof will be omitted herein for the sake of brevity. As shown in Figure 14B, one-byte errors shown by marks △ and □ in Figure 14B become two-byte-errors respectively at the error correction decoder 29 similarly to Figure 14A.

Figure 14C shows the case of inserting two dummy data of four bits to the upper-bit side and the lower-bit side, respectively of alternate words respectively. In this case, only a one-byte-error shown by mark △ in Figure 14C becomes a two-byte-error at the error correction decoder 29.

As a result, in the case shown in Figure 14C degradation of the error correction ability is prevented, as compared with the cases shown in Figures 14A and 14B.

Figure 14D shows the case of inserting dummy data having eight bits. In this case, one-byte-errors shown by marks X, △ and □ in Figure 14D do not cause two-byte errors, thereby eliminating degradation of the error correction.

It is to be noted that a common generating circuit for the header signal may be employed for both modes, and the header-signal-generation period is varied depending on the block period in the A mode and the B mode respectively, by controlling the generating circuit with a mode switching signal.

Next a reproduction system will be described.

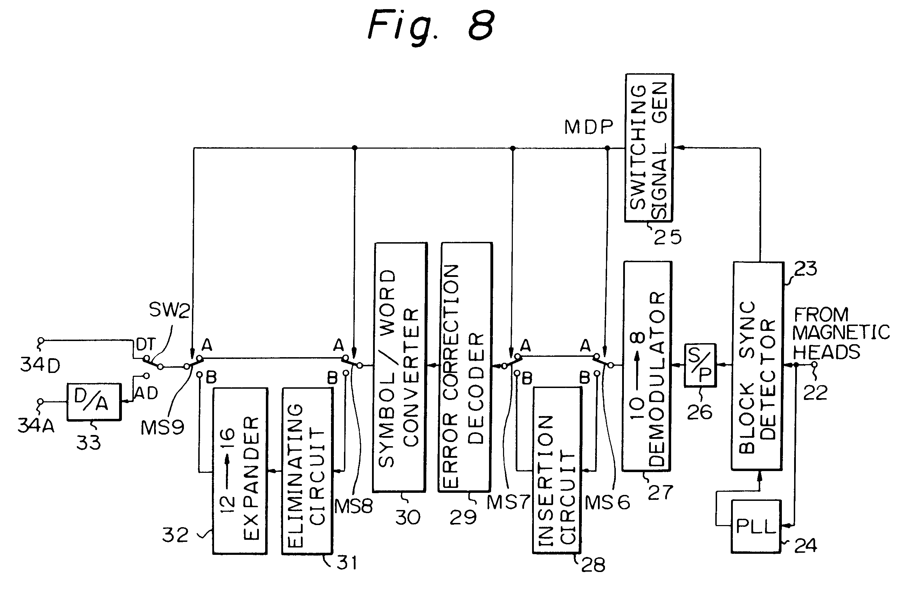

Figure 8 shows an embodiment of reproduction apparatus comprising mode switching circuits MS6 to MS9, each of which engages a terminal A for the A mode and engages a terminal B for the B mode under the control of a mode switching signal MDP which will be described below.

PCM audio data derived from a signal from a rotary reproducing head is supplied to a block synchronization signal detector 23 through an input terminal 22. The PCM audio data supplied through the input terminal 22 is supplied to a phase locked loop (PLL) circuit 24, and as a result a clock signal synchronized with the reproduced signal is derived. The clock signal is supplied to the detector 23 and the block synchronization signal is detected. The detected block synchronization signal is supplied to a switching signal generator 25, and by detecting the detected period it is determined whether the reproduced signal is of the A mode or the B mode, and the mode switching signal MDP is developed accordingly.

The case where the A mode is selected by the mode switching signal MDP will be described first.

Specifically, data in which the block synchronization signal has been detected is serial-to-parallel converted by a serial-parallel converter 26 and supplied to a 10-8 demodulator 27 where 10-bit data are converted into 8-bit symbol data. The symbol data are supplied to an error correction decoder 29 through switch circuits MS6 and MS7 and subjected to error correction processing using the error detection or correction code C2 and the error correction code C1. The error-corrected data are supplied to a symbol/word converter 30 and converted into parallel 16-bit-word-data. These data are supplied to a switch circuit SW2 through the switch circuits MS8 and MS9. The switch circuit SW2 switches between a digital output and an analogue output, and when it engages a terminal DT, a digital audio signal is obtained at an output terminal 34D. When the switch circuit SW2 engages a terminal AD, and data are returned to an analogue signal by a 16-bit D/A converter 33, and an analogue audio signal is produced at an output terminal 34A.

The case where the B mode is selected by the mode switching signal MDP will now be described.

In this case, 8-bit data from the 10-8 demodulator 27 is supplied to an insertion-bit insertion circuit 28 through the switch circuit MS6.

The error-correction-processed data are converted to parallel 16-bit word data in a symbol/word converter 30, and supplied to an insertion bit eliminating circuit 31 through a switch circuit MS8 so that the four insertion bits (dummy data) are eliminated from every word, so forming 12-bit-word data. These data are supplied to a 12 to 16 expander 32 and subjected to expansion corresponding to the compression on the recording side to be converted into 16-bit-word data. The output of the expander 32 is supplied to the switch circuit SW2 through a switch circuit MS9, and a digital audio signal is developed at an output terminal 34D and an analogue audio signal is developed at the output terminal 34A depending on the switching of the switch circuit SW2.

Here, the mode switching signal MDP may be provided by decoding an A/B mode identification signal in the header signal.

A technique in which an 8-mm VTR can be used as a recording and reproducing device only for a PCM audio signal has been proposed by the use of the recording area AV intended for a colour video signal for recording a PCM audio signal (see US patent specification US-A-4 542 419).

Thus, since the area AV, corresponding to 180° range, in which a video signal is normally recorded has a five-fold length as compared that of the PCM area AP, corresponding to a 36° range, the area AV is divided into five equal parts, and as shown in Figure 3, in addition to a track area AP1 of the original PCM audio signal indicated at ① per oblique track 4A and 4B, five areas AP2 to AP6 are provided as indicated at ② to ⑥ A PCM audio signal of one channel, that is, the audio signal of one field period is recorded and reproduced on each of the six areas AP1 to AP6 in the form of a PCM time-compressed signal. Therefore, a six-fold increase in audio recording time (capacity) is achieved. The present invention can be applied to the recording and reproduction of the audio signal in and from each of the six areas AP1 to AP6.

As described, since the error-correction encoding and decoding processes for n-bit words can be done with them in the form of m-bit word (m > n) by adding (m - n) insertion bits to each word, the error correction encoder and decoder can be the same for both m bits and n bits. Accordingly, the hardware requirements are decreased.

It is to be noted that although the 12-bit data are divided into eight bits and four bits, and four bits are inserted in the foregoing embodiments, 12-bit data may be divided into six bits and six bits, and two insertion bits may be added to each six bits.

Although the case of the 16-bit mode and the 12-bit mode corresponding to ME and MP tape respectively has been described, it is possible to use 12-bit mode for ME tape. In addition, switching between the 16-bit mode and the 12-bit mode can be performed in accordance with the tape speed.

Also, the number of bits per word is not limited to those of the embodiments. Moreover, the bits inserted all be 1 or may be a predetermined bit pattern.

In the above embodiments, the numbers of bits m and n are selected with respect to the word unit of two symbols, where one symbol is eight bits. However, it is possible to change the size of the unit. For example, the unit could be one symbol or two words L/R corresponding to left and right audio channels respectively.

Also, although in the above embodiments the invention is applied to the recording and reproduction of a PCM audio signal in an 8-mm VTR, the invention is not limited to that case, and the digital data need not be audio data.

## Claims

1. Data transmission apparatus capable of selecting a first mode in which one data unit is made up of m bits ad a second mode in which one data unit is made up of n bits, m being greater than n, with the same sampling frequency, the apparatus comprising:
error-correction encoding means (15) used commonly for the first and second modes;
insertion means (13) for inserting m - n insertion bits of dummy data into said data unit;
elimination means (16) for eliminating said m - n insertion bits from the data unit; and
addition means (18) for adding header information including at least a block synchronization signal to the data;
the apparatus being arranged so that
in said first mode, m-bit data units are subjected to an encoding process at said error-correction encoding means (15), a block synchronization signal for one-unit-m-bits data is added for every block of the encoded data at said addition means (18), and data from the addition means (18) is transmitted; and
in said second mode, said insertion bits are inserted in each data unit of one-unit-n-bits data, at said insertion means (13) so a to make one-unit-m-bits data, said data are subjected to an encoding process at said error-correction encoding means (15), said insertion bits are eliminated from said encoded data at said elimination (16) means to return them to one-unit-n-bits data, data from said elimination means (16) is supplied to said addition means (18), a block synchronization signal for one-unit-n-bits data is added for every block of the encoded data at said addition means (18), and data from the addition means (18) is transmitted.

2. Apparatus for receiving data selectively transmitted in a first mode in which one unit is made up of m bits or in second mode in which one unit is made up of n bits, m being greater than n, with the same sampling frequency, the apparatus comprising:
switching signal generating means (25) for detecting whether the received data are first mode data or second mode data and generating a mode switching signal in dependence thereon;
insertion means (28) for inserting m - n insertion bits of dummy data;
error-correction decoding means (29) used commonly for the first and second modes; and
elimination means (31) for eliminating the m - n insertion bits from the data;
the apparatus being arranged so that
when the first mode is selected by said mode switching signal, the received data are subjected to an error-correction decoding process at said error-correction decoding means (29), and one-unit-m-bit data are decoded; and
when the second mode is selected by said mode switching signal, the received data are supplied to said insertion means (28) so that said insertion bits are inserted in every unit of the one-unit-n-bit data to make one-unit-m-bit data, these data are supplied to said error-correction decoding means (29) and decoding-processed, the decoding-processed data are fed to said elimination (31) means and said insertion bits are eliminated so as to decode the one-unit-n-bit data.

3. Apparatus according to claim 2 for receiving transmission data with an identification code for identifying the first mode and the second mode, wherein the switching signal generating seas (25) decodes said identification signal to form a mode switching signal.

4. Apparatus according to claim 2 or claim 3 for receiving transmission data from apparatus according to claim 1, the receiving apparatus comprising:
synchronization detection means (23) for detecting the block synchronization signal in the transmission data; wherein
the switching signal generating means (25) detects whether the detected block synchronization signal is a first block synchronization signal or a second block synchronization signal and generates a mode switching signal in dependence thereon.

5. Apparatus for recording a PCM audio signal on a magnetic tape media (21) by magnetic heads (HA, HB), and capable of selecting a first mode in which one unit is made up of m bits and a second mode in which one unit is made up of n bits, m being greater than n, with the same sampling frequency, the apparatus comprising:
error-correction encoding means (15) used commonly for the first and second modes;
insertion means (13) for inserting m - n insertion bits of dummy data into said unit data;
elimination means (16) for eliminating said m - n insertion bits from the data; and
addition means (18) for adding header information including at least a block synchronization signal to the data;
the apparatus being arranged so that
in said first mode, data whose units are of m bits are subjected to an encoding process at said error-correction encoding means (15), a block synchronization signal for one-units-m-bit data is added for every block of the encoding-processed data at said addition means (18), and data from the addition means (18) are transmitted; and
in said second mode, said insertion bits are inserted in each unit of one-unit-n-bit data at said insertion means (13) so as to form one-unit-m-bit data, said data are supplied to said error correction encoding means (15) and subjected to an encoding process, said insertion bits are eliminated from said encoding-processed data at said eliminating means (16) to return the data to one-unit-n-bit data, data from said elimination (16) means are supplied to said addition means (18), a block synchronization signal for one-unit-n-bit is added for every block, and data from the addition means (18) are transmitted to said magnetic heads (HA, HB) and recorded.

6. Apparatus according to claim 5 further comprising means for compressing one-unit-m-bits data to one-unit-n-bits data prior to inserting said m - n bits of dummy data.

7. Apparatus according to claim 5 further comprising a word/symbol data converter (14) for dividing said data units into upper bit data symbols and lower bit data symbols prior to said error-correction encoding means (15).

8. Apparatus according to claim 7 further comprising a bit-number conversion circuit (17) for modifying the bit patterns of said data prior to said addition means (18), to reduce the dc component.

9. Apparatus according to claim 8 wherein said insertion means (13) adds said dummy data as the upper bits of said data units.

10. Apparatus according to claim 8 wherein said insertion means (13) adds said dummy data as the upper bits and the lower bits respectively of alternate data units.

11. Apparatus according to claim 5 wherein said addition means (18) adds a mode identification signal indicating whether said first mode or said second mode is selected for the data.

12. Apparatus according to claim 5 wherein said first mode is selected when magnetic tape (2) of evaporated metal type is used, and said second mode is selected when magnetic tape (2) of metal powder type is used.

## Patentansprüche

1. Datenübertragungsvorrichtung, mit welcher ein erster Modus, bei dem eine einzelne Dateneinheit aus m Bit gebildet ist, und ein zweiter Modus, bei dem eine einzelne Dateneinheit aus n Kleiner m Bit gebildet ist, mit der gleichen Abtastfrequenz wählbar ist, bestehend aus:
einer für den ersten und zweiten Modus gemeinsam benutzten Fehlerkorrektur-Kodierungseinrichtung (15),
einer Einfügeeinrichtung (13) zum Einfügen von m - n Einfügebits aus Fülldaten in die Dateneinheit,
einer Eliminierungseinrichtung (16) zum Eliminieren der m - n Einfügebits aus der Dateneinheit, und
einer Additionseinrichtung (18) zum Addieren von wenigstens ein Blocksynchronisationssignal enthaltender Kopfinformation zu den Daten,
wobei die Vorrichtung derart ausgebildet ist, daß im ersten Modus m-Bit-Dateneinheiten in der Fehlerkotrektur-Kodierungseinheit (15) einem Kodierungsprozess unterworfen werden,
für jeden Block aus den kodierten Daten ein Blocksynchronisationssignal für m-Bit-Einzeleinheitdaten in der Additionseinrichtung (18) addiert wird und Daten aus der Additionseinrichtung (18) übertragen werden, und
im zweiten Modus die Einfügebits in jede Dateneinheit aus n-Bit-Einzeleinheitdaten in der Einfügeeinrichtung (13) eingefügt werden, um m-Bit-Einzeleinheitdaten zu bilden, wobei die Daten in der Fehlerkorrektur-Kodierungseinrichtung (15) einem Kodierungsprozess unterworfen werden, die Einfügebits in der Eliminierungseinrichtung (16) eliminiert werden, um sie in n-Bit-Einzeleinheitdaten rückzuführen, Daten aus der Eliminierungseinrichtung (16) der Additionseinrichtung (18) zugeführt werden, in der Additionseinrichtung (18) für jeden Block kodierter Daten ein Blocksynchronisationssignal für n-Bit-Einzeleinheitdaten addiert wird und Daten aus der Additionseinrichtung (18) übertragen werden.

2. Vorrichtung zum Empfang von wahlweise in einem ersten Modus, bei dem eine einzelne Einheit aus m Bit gebildet ist, oder in einem zweiten Modus, bei dem eine einzelne Einheit aus n kleiner m Bit gebildet ist, mit der gleichen Abtastfrequenz übertragenen Daten, bestehend aus:
einer Schaltsignalerzeugungseinrichtung.(25) zum Feststellen, ob die empfangenen Daten vom ersten oder zweiten Modus sind, und zur davon abhängigen Erzeugung eines Modensignals,
einer Einfügeeinrichtung (28) zum Einfügen von m - n Einfügebits aus Fülldaten, einer für den ersten und zweiten Modus gemeinsam benutzten Fehlerkorrektur-Dekodierungseinrichtung (29), und
einer Eliminierungseinrichtung (31) zum Eliminieren der m - n Einfügebits aus den Daten,
wobei die Vorrichtung derart ausgebildet ist, daß
bei Auswahl des ersten Modus durch das Modenschaltsignal die empfangenen Daten in der Fehlerkorrektur-Dekodierungseinnchtung (29) einem Fehlerkorrektur-Dekodierungsprozess unterworfen und m-Bit-Einzeleinheitdaten dekodiert werden, und bei Auswahl des zweiten Modus durch das Modenschaltsignal die empfangenen Daten der Einfügeeinrichtung (28) zugeführt werden, so daß in jede Einheit der n-Bit-Einzeleinheitdaten Einfügebits zur Bildung von m-Bit-Einzeleinheitdaten eingefügt werden, wobei diese Daten der Fehlerkorrektur-Dekodierungseinrichtung (29) zugeführt und dem Dekodierungsprozess unterworfen werden, und die dem Dekodierungsprozess unterworfenen Daten der Eliminierungseinrichtung (31) zugeführt und die Einfügebits eliminiert werden, um die n-Bit-Einzeleinheitsdaten zu dekodieren.

3. Vorrichtung nach Anspruch 2 zum Empfang von Übertragungsdaten mit einem Identifikationskode zum Identifizieren des ersten und zweiten Modus, wobei die Schaltsignalerzeugungseinrichtung (25) das Identifikationssignal zur Bildung eines Modenschaltsignals dekodiert.

4. Vorrichtung nach Anspruch 2 oder 3 zum Empfang von Übertragungsdaten aus der Vorrichtung nach Anspruch 1, wobei die Empfangseinrichtung aufweist:
eine Synchronisationsdetektoreinrichtung (23) zum Detektieren des Blocksynchronisationssignals in den Übertragungsdaten,.wobei die Schaltsignalerzeugungseinrichtung (25) feststellt, ob das detektierte Blocksynchronisationssignal ein erstes oder zweites Blocksynchronisationssignal ist, und davon abhängig ein Modenschaltsignal erzeugt.

5. Vorrichtung zum Aufzeichnen eines PCM-Audiosignals auf einem Magnetband (21) mittels Magnetköpfen (HA, HB) und mit der ein erster Modus, bei dem eine einzelne Einheit aus m Bit gebildet ist, und ein zweiter Modus, bei dem eine einzelne Einheit aus n kleiner m Bit gebildet ist, mit der gleichen Abtastfrequenz auswählbar ist, bestehend aus:
einer für den ersten und zweiten Modus gemeinsam benutzten Fehlerkorrektur-Kodierungseinrichtung (15),
einer Einfügeeinrichtung (13) zum Einfügen von m - n Einfügebits aus Fülldaten in die Einheitsdaten,
einer Eliminierungseinrichtung (16) zum Eliminieren der m - n Einfügebits aus den Daten, und
einer Additionseinrichtung (18) zum Addieren von wenigstens ein Blocksynchronisationssignal enthaltender Kopfinformation zu den Daten,
wobei die Vorrichtung derart ausgebildet ist, daß
im ersten Modus Daten, deren Einheiten aus m Bit bestehen, in der Fehlerkorrektur-Kodierungseinrichtung (15) einem Kodierungsprozess unterworfen werden, für jeden Block aus den dem Kodierungsprozess unterworfenen Daten ein Blocksynchronisationssignal für m-Bit-Einzeleinheitdaten in der Additionseinrichtung (18) addiert wird und Daten aus der Additionseinrichtung (18) übertragen werden, und
im zweiten Modus die Einfügebits in jede Einheit aus n-Bit-Einzeleinheitdaten in der Einfügeeinrichtung (13) eingefügt werden, um m-Bit-Einzeleinheitdaten zu bilden, wobei die Daten der Fehlerkorrektur-Kodierungseinrichtung (15) zugeführt und einem Kodierungsprozess unterworfen werden, die Einfügebits in der Eliminierungseinrichtung (16) eliminiert werden, um die Daten in n-Bit-Einzeleinheitdaten rückzuführen, Daten aus der Eliminierungseinrichtung (16) der Additionseinrichtung (18) zugeführt werden, in der Additionseinrichtung (18) für jeden Block kodierter Daten ein Blocksynchronisationssignal für n-Bit-Einzeleinheitdaten addiert wird und Daten aus der Additionseinrichtung (18) zu den Magnetköpfen (HA, HB) übertragen und aufgezeichnet werden.

6. Vorrichtung nach Anspruch 5, mit einer Einrichtung zum Komprimieren von m-Bit-Einzeleinheitdaten auf n-Bit-Einzeleinheitdaten vor dem Einsetzen der m - n Bits aus Fülldaten.

7. Vorrichtung nach Anspruch 5 oder 6, mit einem der Fehlerkorrektur-Kodietungseinrichtung (15) vorgeschalteten Wort/Symbol-Datenkonverter zum Unterteilen der Dateneinheiten in höhere Datenbitsymbole und niedrigere Datenbitsymbole.

8. Vorrichtung nach Anspruch 7, mit einer der Additionseinrichtung (18) vorgeschalteten Bitzahl-Umwandlungseinrichtung (17) zum Modifizieren von Bitmustern zwecks Reduzierung einer Gleichsignalkomponente.

9. Vorrichtung nach Anspruch 8, wobei die Einfügeeinrichtung (13) die Fülldaten als die höheren Bits der Dateneinheiten hinzufügt.

10. Vorrichtung nach Anspruch 8 wobei die Einfügeeinrichtung (13) die Fülldaten als die höheren bzw. niedrigeren Bits abwechselnder Dateneinheiten hinzufügt.

11. Vorrichtung nach einem der Ansprüche 5 bis 10, wobei die Additionseinrichtung (18) ein Modenidentifikationssignal, welches anzeigt, ob für die Daten der erste oder zweite Modus gewählt ist, hinzufügt.

12. Vorrichtung nach einem der Ansprüche 5 bis 11, wobei der erste Modus gewählt wird, wenn ein Magnetband (2) aus aufgedampftem Metall benutzt wird, und der Zweite Modus gewählt wird, wenn ein Magnetband (2) aus Metallpulver verwendet wird.

## Revendications

1. Dispositif de transmission de données pour la sélection d'un premier mode dans lequel une unité de données est constituée de m bits et d'un second mode dans lequel une unité de données est constituée de n bits, m étant supérieur à n, à la même fréquence d'échantillonnage, le dispositif comprenant :
un moyen de codage pour la correction d'erreurs (15) mis en oeuvre en commun pour les premier et second modes ;
un moyen d'insertion (13) pour insérer m - n bits d'insertion de données fictives dans ladite unité de données ;
un moyen d'élimination (16) pour lesdits m - n bits d'insertion de l'unité de données ; et,
un moyen d'addition (18) pour ajouter un en-tête d'information incluant au moins un signal de synchronisation de bloc aux données ;
le dispositif étant agencé de telle sorte que :
dans ledit premier mode, des unités de m bits de données sont soumises à une opération de codage dans ledit moyen de codage pour la correction d'erreurs (15), un signal de synchronisation de bloc pour les données à unité de m bits est ajouté pour chaque bloc des données codées dans ledit moyen d'addition (18), et les données provenant du moyen d'addition (18) sont transmises ; et,
dans ledit second mode, lesdits bits d'insertion sont insérés dans chaque unité de données des données à unité de n bits dans ledit moyen d'insertion (13) de manière à former des données à unité de m bits, lesdites données sont soumises à une opération de codage dans ledit moyen de codage pour la correction d'erreurs (15), lesdits bits d'insertion sont éliminés desdites données codées dans ledit moyen d'élimination (16) pour les remettre en données à unité de n bits, les données provenant dudit moyen d'élimination (16) sont fournies audit moyen d'addition (18), un signal de synchronisation de bloc pour les données à unité de n bits est ajouté pour chaque bloc des données codées dans ledit moyen d'addition (18), et les données provenant du moyen d'addition (18) sont transmises.

2. Dispositif pour recevoir des données transmises sélectivement dans un premier mode où une unité est constituée de m bits ou dans un second mode où une unité est constituée de n bits, m étant supérieur à n, à la même fréquence d'échantillonnage, le dispositif comprenant :
un moyen générateur de signaux de changement (25) pour détecter si les données reçues sont des données du premier mode ou des données du second mode et engendrer un signal de changement de mode selon celles-ci ;
un moyen d'insertion (28) pour insérer m - n bits d'insertion de données fictives ;
un moyen de décodage pour la correction d'erreurs (29) mis en oeuvre en commun pour les premier et second modes ; et,
un moyen d'élimination (31) pour éliminer m - n bits d'insertion des données ;
le dispositif étant agencé de telle sorte que :
quand le premier mode est sélectionné par ledit signal de changement de mode, les données reçues sont soumises à une opération de décodage pour la correction d'erreurs dans ledit moyen de décodage pour la correction d'erreurs (29), et des données à unité de m bits sont décodées ; et,
quand le second mode est sélectionné par ledit signal de changement de mode, les données reçues sont fournies audit moyen d'insertion (28) de telle sorte que lesdits bits d'insertion sont insérés dans chaque unité des données à unité de n bits pour former des données à unité de m bits, ces données sont fournies audit moyen de décodage pour la correction d'erreurs (29) et traitées par décodage, les données traitées par décodage sont envoyées audit moyen d'élimination (31) et lesdits bits d'insertion sont éliminés de manière à décoder les données à unité de n bits.

3. Dispositif selon la revendication 2, pour recevoir des données de transmission avec un code d'identification pour identifier le premier mode et le second mode, dans lequel le moyen générateur de signaux de changement (25) décode ledit signal d'identification pour former un signal de changement de mode.

4. Dispositif selon l'une quelconque des revendications 2 et 3, pour recevoir des données de transmission d'un dispositif selon la revendication 1, le dispositif récepteur incluant :
un moyen de détection de signaux de synchronisation (23) pour détecter le signal de synchronisation de bloc dans les données de transmission ;
dans lequel
le moyen générateur de signaux de changement (25) détecte si le signal de synchronisation de bloc détecté est un premier signal de synchronisation de bloc ou un second signal de synchronisation de bloc et engendre un signal de changement de mode selon celui-ci.

5. Dispositif pour enregistrer un signal sonore modulé par modulation par impulsions codées MIC sur un support à bande magnétique (21) au moyen de têtes magnétiques (HA, HB), et pouvant sélectionner un premier mode dans lequel une unité est constituée de m bits et un second mode dans lequel une unité est constituée de n bits, m étant supérieur à n, à la même fréquence d'échantillonnage, le dispositif comprenant :
un moyen de codage pour la correction d'erreurs (15) mis en oeuvre en commun pour les premier et second modes ;
un moyen d'insertion (13) pour insérer m - n bits d'insertion de données fictives dans ladite unité de données ;
un moyen d'élimination (16) pour éliminer lesdits m - n bits d'insertion des données ; et,
un moyen d'addition (18) pour ajouter un en-tête d'information incluant au moins un signal de synchronisation de bloc aux données ;
le dispositif étant agence de telle sorte que :
dans ledit premier mode, les données dont les unités sont constituées de m bits sont soumises à une opération de codage dans ledit moyen de codage pour la correction d'erreurs (15), un signal de synchronisation de bloc pour les données à unité de m bits est ajouté pour chaque bloc des données traitées par codage dans ledit moyen d'addition (18), et les données provenant du moyen d'addition (18) sont transmises ; et,
dans ledit second mode, lesdits bits d'insertion sont insérés dans chaque unité de données à unité de n bits dans ledit moyen d'insertion (13) de manière à former des données à unité de m bits, lesdites données sont fournies audit moyen de codage pour la correction d'erreurs (15) et soumises à une opération de codage, lesdits bits d'insertion sont éliminés desdites données traitées par codage dans ledit moyen d'élimination (16) pour remettre les données en données à unité de n bits, les données provenant dudit moyen d'élimination (16) sont fournies audit moyen d'addition (18), un signal de synchronisation de bloc pour une unité de n bits est ajouté pour chaque bloc, et les données provenant du moyen d'addition (18) sont transmises auxdites têtes magnétiques (HA, HB) et enregistrées.

6. Dispositif selon la revendication 5, comprenant en outre un moyen pour comprimer les données à unité de m bits en données à unité de n bits avant d'insérer lesdits m - n bits de données fictives.

7. Dispositif selon la revendication 5, comprenant en outre un convertisseur de mot/de symbole de données (14) pour diviser lesdites unités de données en symboles de bits de données de poids fort et en symboles de bits de données de poids faible avant ledit moyen de codage pour la correction d'erreurs (15).

8. Dispositif selon la revendication 7, comprenant en outre un circuit convertisseur de nombre de bits (17) pour modifier les combinaisons de bits desdites données avant ledit moyen d'addition (18), afin de réduire la composante de courant continu CC.

9. Dispositif selon la revendication 8, dans lequel ledit moyen d'insertion (13) ajoute lesdites données fictives comme bits de poids fort desdites unités de données.

10. Dispositif selon la revendication 8, dans lequel ledit moyen d'insertion (13) ajoute lesdites données fictives comme bits de poids fort et bits de poids faible respectivement d'unités de données alternées.

11. Dispositif selon la revendication 5, dans lequel ledit moyen d'addition (18) ajoute un signal d'identification de mode indiquant si ledit premier mode ou ledit second mode est sélectionné pour les données.

12. Dispositif selon la revendication 5, dans lequel ledit premier mode est sélectionné quand une bande magnétique (2) de type à métal évaporé est utilisée, et ledit second mode est sélectionné quand une bande magnétique (2) de type à poudre de métal est utilisée.
